(19) **Europäisches Patentamt / European Patent Office / Office européen des brevets**

(11) **EP 1 399 716 B1**

(12) **FASCICULE DE BREVET EUROPEEN**

(45) Date de publication et mention de la délivrance du brevet:
**16.01.2008 Bulletin 2008/03**

(21) Numéro de dépôt: **02764928.4**

(22) Date de dépôt: **24.06.2002**

(51) Int Cl.:
*G01F 1/708* (2006.01)   *G01F 1/66* (2006.01)

(86) Numéro de dépôt international:
**PCT/FR2002/002187**

(87) Numéro de publication internationale:
**WO 2003/001159 (03.01.2003 Gazette 2003/01)**

(54) **PROCEDE ET DISPOSITIF DE MESURE DES VITESSES DE LIQUIDES DANS DES CONDUITES ET DES CANAUX**

VERFAHREN UND VORRICHTUNG ZUR FLÜSSIGKEITSGESCHWINDIGKEITSMESSUNG IN ROHREN UND KANÄLEN

METHOD AND DEVICE FOR MEASURING THE SPEED OF LIQUIDS IN CONDUITS AND CHANNELS

(84) Etats contractants désignés:
**AT BE CH CY DE DK ES FI FR GB GR IE IT LI LU MC NL PT SE TR**

(30) Priorité: **25.06.2001 FR 0108346**

(43) Date de publication de la demande:
**24.03.2004 Bulletin 2004/13**

(73) Titulaire: **Université Louis Pasteur, (Etablissement public à caractère scientifique, culturel et professionnel) F-67000 Strasbourg (FR)**

(72) Inventeurs:
• **SCRIVENER, Olivier**
  **F-67000 Strasbourg (FR)**
• **SCHWALLER, Benoît**
  **F-67620 Soufflenheim (FR)**
• **HURTHER, David**
  **F-67160 Wissembourg (FR)**
• **FISCHER, Stéphane**
  **F-67000 Strasbourg (FR)**

(74) Mandataire: **Nuss, Pierre et al Cabinet Nuss 10, rue Jacques Kablé 67080 Strasbourg Cédex (FR)**

(56) Documents cités:
**EP-A- 0 794 411            WO-A-88/08516**
**US-A- 5 421 211            US-A- 5 821 427**
**US-A- 5 844 144**

• **PATENT ABSTRACTS OF JAPAN vol. 009, no. 163 (P-371), 9 juillet 1985 (1985-07-09) & JP 60 040916 A (SHIGERU TANIZAWA;OTHERS: 01), 4 mars 1985 (1985-03-04)**

**Description**

La présente invention concerne le domaine de la surveillance des réseaux hydrauliques, en particulier la mesure des vitesses de liquides dans des conduites et des canaux, notamment des réseaux d'assainissement transportant les rejets d'eaux, naturelles, pluviales ou industrielles, et a pour objet un procédé de mesure des vitesses de liquides dans des conduites et des canaux.

L'invention a également pour objet un dispositif pour la mise en oeuvre de ce procédé.

Dans le cadre de la gestion des réseaux, en particulier des réseaux d'assainissement, il est souhaitable de connaître de manière très précise et pratiquement en temps réel les conditions d'écoulement dans les conduites et canaux et, notamment, les fluctuations des vitesses d'écoulement des fluides.

En effet, il est important de connaître de manière précise ces caractéristiques d'écoulement, afin de pouvoir anticiper tous risques de surcharge du réseau et d'éviter ainsi un dysfonctionnement de celui-ci. Un tel dysfonctionnement survient notamment lorsque la charge de fluide à traiter augmente brusquement, transite alors trop rapidement dans les cellules de traitement et occasionne un afflux important de polluants pouvant entraîner une surcharge du milieu digesteur formé de micro-organismes bactériens et un arrêt prolongé du procédé d'épuration.

Actuellement, il n'existe pas de dispositif, facile à installer sans calibration préalable, permettant une mesure fiable, en continu et locale de flux liquides comportant des particules en suspension, et ainsi d'influer en aval sur l'écoulement et le traitement desdits flux liquides.

La présente invention a pour but de pallier ces inconvénients en proposant un procédé et un dispositif de mesure des vitesses de liquides dans des conduites et des canaux permettant de gérer en temps réel des flux de liquides et de réaliser leur distribution de manière optimale.

A cet effet, le procédé de mesure des vitesses de liquides dans des conduites et des canaux, conforme à l'invention, comporte les étapes énumérées dans la revendication 1.

Ce procédé permet la mesure des vitesses, quasi-instantanément et sans étalonnage préalable, en un point ou en plusieurs points situés sur le trajet du faisceau d'ultrasons.

L'invention a également pour objet un dispositif pour la mise en oeuvre de ce procédé qui est défini dans la revendication 15.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue schématique en perspective d'un dispositif pour la mise en oeuvre du procédé conforme à l'invention ;
la figure 2 est une vue schématique explicitant la phase de mesure ;
la figure 3 représente un échantillonnage dans le temps d'un signal de mesure en mode monocanal ;
la figure 4 représente un échantillonnage spatial d'un signal de mesure instantané pour une trame d'émission en mode multicanaux ;
la figure 5 est un schéma par blocs d'un dispositif électronique d'alimentation et de commande de l'émetteur-récepteur d'ultrasons ;
la figure 6 est un schéma par blocs du démodulateur du dispositif électronique d'alimentation et de commande de l'émetteur-récepteur d'ultrasons, et
les figures 7 et 8 sont respectivement une courbe de densité spectrale de puissance seule ou courbe "gaussienne fréquentielle" et une courbe de densité spectrale de puissance recalculée en tenant compte des marges d'erreur.

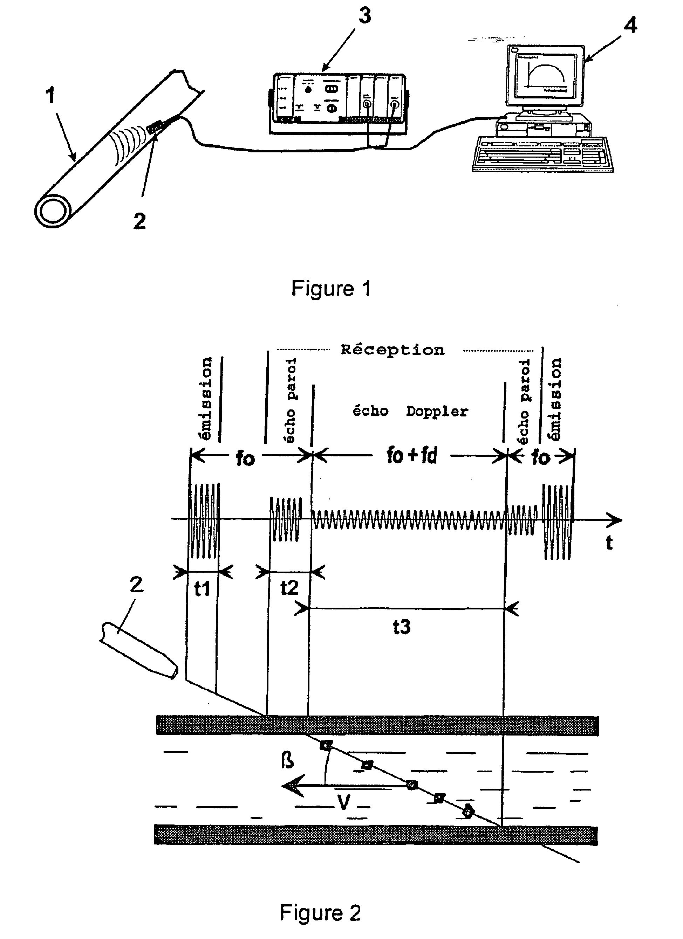

La figure 1 des dessins annexés représente un dispositif de mesure des vitesses de liquides dans des conduites et des canaux 1.

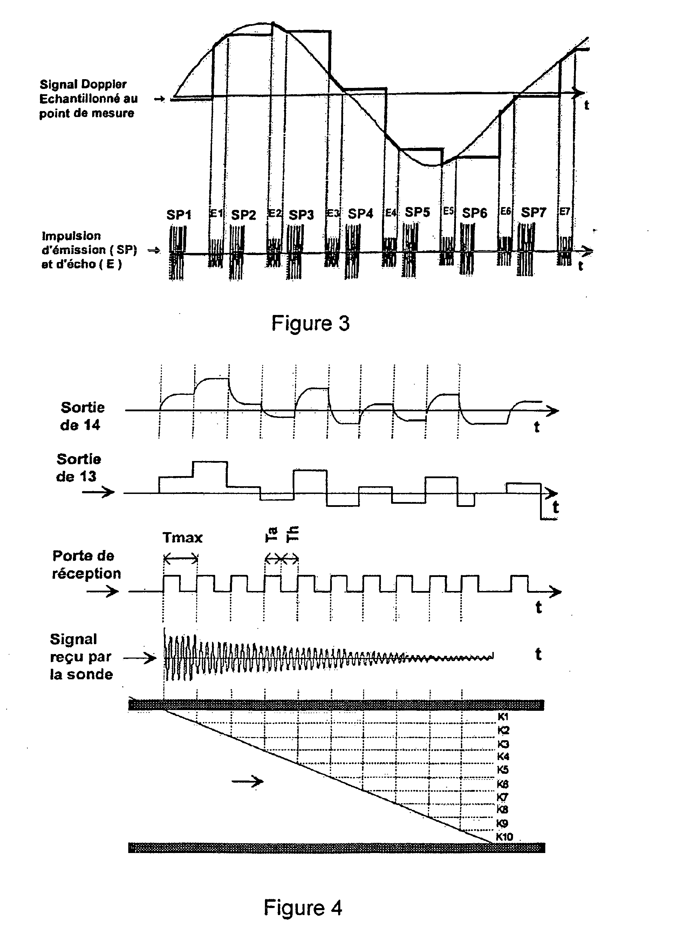

Conformément à l'invention, ce dispositif met en oeuvre un procédé de mesure des vitesses de liquides dans des conduites et des canaux 1, qui consiste essentiellement à réaliser, transversalement à un écoulement et suivant un angle incliné par rapport à la verticale de l'écoulement, à une fréquence variable mais prédéterminée, une suite d'émissions et de réceptions d'ultrasons, au moyen d'un émetteur-récepteur d'ultrasons 2, à une fréquence $f_0$ pendant un temps $t_1$, à enregistrer successivement un signal rétro diffusé par les parois de la conduite ou du canal 1, pendant une période $t_2$, et le signal de fréquence $f_0 \pm f_d$ rétro diffusé par les traceurs et/ou les particules en suspension dans l'écoulement pendant une période $t_3$ (figure 2), puis à analyser les modulations en fréquence et en amplitude de ce signal, afin d'en extraire une ou des valeurs durant un ou des intervalles de temps d'écho alloués à une ou à des tranches considérées (figures 3 et 4).

Le dispositif de mesure des vitesses de liquides dans des conduites et des canaux 1 mettant en oeuvre ce procédé est essentiellement constitué par au moins un émetteur-récepteur d'ultrasons 2, par un dispositif électronique 3 d'alimentation et de commande dudit émetteur-récepteur d'ultrasons 2, et par un dispositif électronique 4 de traitement des signaux et d'extraction de l'information recherchée.

Le dispositif électronique 4 permet à l'utilisateur de choisir les différents paramètres d'émission, à savoir la fréquence d'émission et la largeur d'impulsion émise, et de réception, tels que la localisation et le dimensionnement de la fenêtre, en mode monocanal, ou le nombre des tranches ($t_3/T_{max}$) et le dimensionnement des fenêtres ($T_a$-$T_h$) en mode multicanaux (figure 4).

L'émetteur-récepteur d'ultrasons 2 est activé comme émetteur à une fréquence $f_0$ pendant un temps $t_1$ qui est répété à une fréquence choisie. Dès la fin de chaque émission l'émetteur-récepteur d'ultrasons 2 bascule en mode réception jusqu'à la prochaine émission. Les ondes rétro diffusées pendant la période $t_2$ ont la même fréquence que l'onde émise. Pendant la période $t_3$ le signal réceptionné est modulé en amplitude et en fréquence. Ce signal résulte de la rétro diffusion du signal par les particules présentes sur le trajet de l'onde émise. La modulation en amplitude est une fonction de la taille des particules, alors que la modulation en fréquence résulte de l'effet Doppler $f_0$, qui est une fonction de la vitesse de la particule insonnée.

L'analyse du signal reçu par l'émetteur-récepteur d'ultrasons 2 pendant la période $t_3$ consiste à le diviser en un nombre prédéterminé de tronçons ou de segments de mesure, avantageusement compris entre 8 et 128. Le choix du nombre de tronçons ou de segments de mesure est fixé par l'utilisateur en fonction de la précision recherchée et de la profondeur de pénétration dans le milieu. Chaque segment ou tronçon de mesure ainsi déterminé correspond à un volume de mesure dans l'écoulement, en première approximation cylindrique, dont la localisation est calculée en tenant compte de la vitesse du son dans le liquide et du temps écoulé entre l'émission et la réception du segment de signal.

La figure 2 des dessins annexés représente une phase de réception située entre deux phases d'émission d'ultrasons de l'émetteur-récepteur d'ultrasons 2. Pendant cette phase de réception, l'émetteur-récepteur d'ultrasons 2 détecte le signal de fréquence rétro diffusé par les particules en mouvement, à savoir respectivement $f_0 + f_d$ ou $f_0 - f_d$, suivant le sens du vecteur de vitesse v.

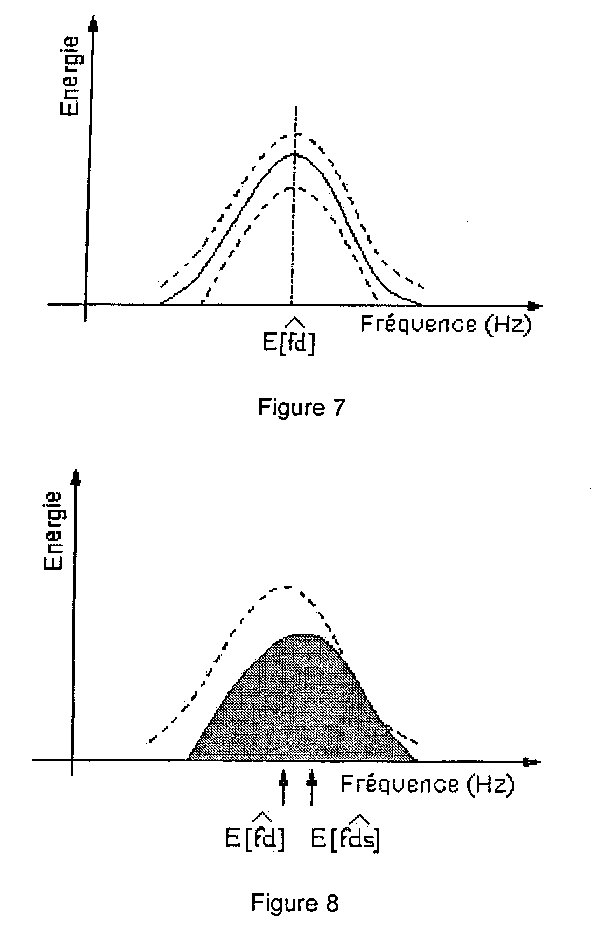

Pour une meilleure compréhension, dans la suite de la description, il sera pris en considération un cas idéal de signal sinusoïdal résultant du passage d'une particule unique dans le volume de mesure. Après multiplication analogique dans un module multiplieur 12 (figure 6) avec la fréquence porteuse et filtrage, ce signal est échantillonné à une fréquence respectant la fréquence de Shannon, au moyen d'un échantillonneur-bloqueur 14 (figure 6), en des fenêtres d'écho $E_1$ à $E_N$ (figure 3).

Dans le cas d'un traitement en mode monocanal, comme représenté à la figure 3 des dessins annexés, le signal en échelon rétro diffusé, ou signal Doppler, reçu par l'émetteur-récepteur d'ultrasons 2, est traité par un filtre de reconstruction de la sinusoïde, dont la réponse temporelle a préalablement été adaptée au spectre du signal analysé, afin d'obtenir à la sortie un signal de sortie continu.

Lors d'un traitement en mode multicanaux (figure 4), le signal Doppler $f_0 + f_d$ est rétrodiffusé en continu par le milieu en écoulement tout au long de la corde analysée, qui correspond à l'axe d'émission de l'émetteur 2 dans la conduite ou le canal concerné. L'échantillonneur-bloqueur 14 (figure 6) isole un signal Doppler, comme précédemment, pour chaque tranche d'écoulement localisée dans chacune des fenêtres temporelles isolées pendant la période $t_3$ (figure 2). Dans l'exemple de la figure 4, la période $t_3$ est segmentée en dix tranches correspondant à dix paliers K1 à K10 (Kn) dans la trame ou encore à dix localisations du volume de mesure. La valeur de l'amplitude de chaque palier varie avec chaque trame considérée. Le signal analogique résultant est naturellement multiplexé pour être transféré par une interface de ligne à un convertisseur analogique/digital déporté, qui le numérise. L'information de la vitesse correspondant à chaque volume de mesure est obtenue par un traitement correspondant du signal numérisé.

L'émetteur-récepteur d'ultrasons 2 est sous forme d'une sonde piézo-électrique placée transversalement à l'écoulement et inclinée d'un angle β par rapport à l'écoulement (figure 2). Cet émetteur-récepteur d'ultrasons 2 peut être fixée sur la paroi de la conduite ou canal 1 avec interposition d'un gel, sur le fond d'un canal ou sur une canne mobile qui peut être plongée dans l'écoulement.

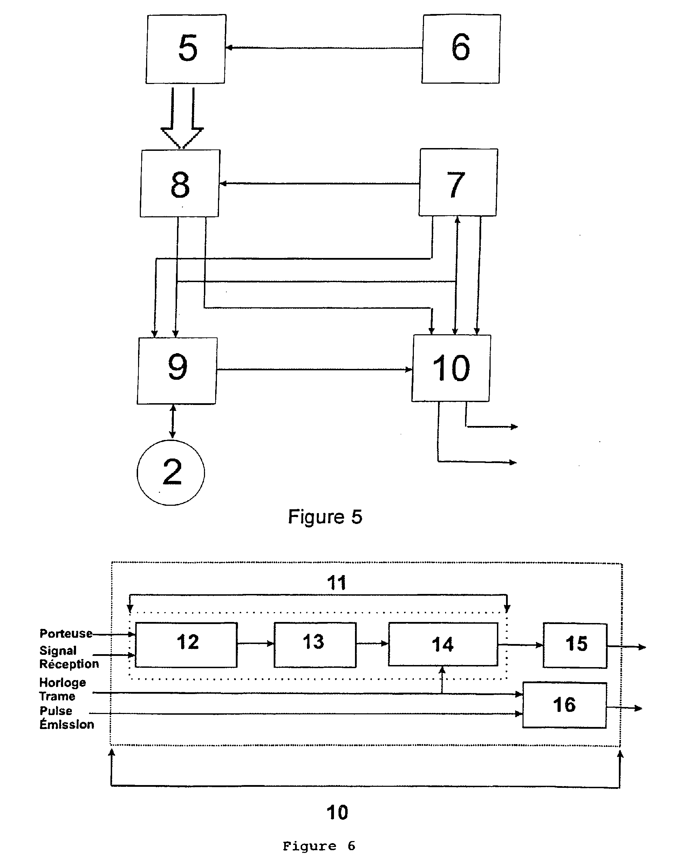

Le dispositif électronique 3 d'alimentation et de commande de l'émetteur-récepteur d'ultrasons 2 est constitué, comme le montre la figure 5 des dessins annexés, par un tableau de commande 5, par un module d'alimentation 6, par un oscillateur 7, par un séquenceur 8, par un dispositif de pilotage de sonde 9 et par une carte de démodulation 10 de l'écho Doppler, l'ensemble de ces éléments étant monté dans un coffret non représenté.

Le module d'alimentation 6 délivre les tensions continues nécessaires pour le fonctionnement des différents constituants du dispositif électronique 3 d'alimentation et de commande de l'émetteur-récepteur d'ultrasons 2. Le tableau de commande 5, disposé en façade du coffret est destiné à permettre de choisir les paramètres de fonctionnement du dispositif à l'émission, à savoir le mode de fonctionnement monocanal ou multicanaux, la largeur de la fenêtre d'émission, la fréquence de répétition des trames, la profondeur et la taille de la fenêtre d'analyse en mode monocanal et la largeur $T_a$ d'échantillonnage et la durée $T_h$ de blocage de l'échantillonneur-bloqueur 14 en mode multicanaux (figure 4).

L'oscillateur 7 (figure 5) a pour fonction de délivrer au dispositif de pilotage de sonde 9 un signal sinusoïdal de fréquence $f_0$ de 8Mhz. Cette fréquence pourra être divisée en fonction des caractéristiques souhaitées par l'utilisateur en $f_0/2$, $f_0/4$, $f_0/8$ ou $f_0/16$. Cet oscillateur 7, qui est sous forme d'une carte électronique, synchronise aussi l'émission-réception Doppler du dispositif 9 (figure 5) et le séquencement par le séquenceur 8 (figure 5) des trames démodulées par la carte de démodulation 10 (figure 5).

Le séquenceur 8 (figure 5) commande le basculement de l'émetteur-récepteur d'ultrasons 2 du mode émission vers le mode réception et réciproquement. Il commande également la démodulation du signal par la carte de démodulation 10, afin d'assurer les fonctions d'échantillonnage-bloquage post-démodulation du signal Doppler au moyen de l'échantillonneur-bloqueur 14 (figure 6).

Le dispositif de pilotage 9 de la sonde piézo-électrique formant l'émetteur-récepteur d'ultrasons 2 comporte un module d'émission HF, un module de réception HF et un module de compensation permettant le basculement entre le mode émission et le mode réception, avec désactivation mutuelle des circuits émission et réception.

La carte de démodulation 10 de l'écho Doppler, représentée à la figure 6 des dessins annexés, comporte, d'une part, un ensemble démodulateur 11, formé par un module multiplieur 12 piloté par l'oscillateur 7, par un filtre passe-bas 13 et par un circuit échantillonneur-bloqueur 14 piloté par le séquenceur de trame 8 et, d'autre part, une interface de ligne 15 pour le signal analogique multiplexé et une interface de lignes 16 pour les signaux de commandes. Le filtre passe-bas 13 supprime la partie haute 2 * ($f_o$ + $f_d$) du spectre de démodulation et le circuit échantillonneur-bloqueur 14 sépare le spectre purement Doppler du spectre dominant.

L'interface de ligne 16 est une interface de type RS432 destinée à la transmission des signaux de commandes émanant notamment de l'horloge de trame du séquenceur 8 et sous forme de pulses d'émission $T_a$ et $T_h$ (figure 4), qui sont ensuite utilisés comme déclencheur externe du dispositif électronique 4 d'acquisition de données et de traitement des signaux et d'extraction de l'information recherchée.

Selon une variante de réalisation de l'invention, la carte de démodulation 10 (figure 5) peut être complétée par un module de déphasage permettant de disposer du signal et du signal déphasé de $\pi/2$.

Le dispositif électronique 4 de traitement des signaux et d'extraction de l'information recherchée est avantageusement du type micro-ordinateur muni d'un processeur pourvu d'un module composé d'un convertisseur de type RS432- commande logique TTL et d'un déclencheur synchrone permettant de piloter le déclencheur externe de la carte de conversion analogique/digitale. Les caractéristiques minimales de cette carte sont : 12 bits, 1 MHz et accès direct à la mémoire obligatoire.

L'ensemble conditionnement de lignes et déclencheur synchrone sont conçus pour pouvoir être intégrés avec une carte de conversion analogique/digitale et un automate industriel dans un coffret de type 3U-19" PCI, qui est un standard métrologique industriel.

Le dispositif complet ainsi obtenu peut alors être utilisé par connexion à un réseau de type RS488, RS485, Prof-bus Ethernet, etc..., à la convenance de l'utilisateur.

Le traitement du signal numérique est expliqué ci-après en regard des figures 7 et 8 annexées. A chaque tranche K1 à K10 (Kn) de la figure 4 est associé un signal Doppler {x(t)}, considérée comme une variable aléatoire. L'information de vitesse d'écoulement est obtenue par le traitement, canal par canal, du signal numérique délivré par la carte de conversion analogique/digitale, à l'aide d'un logiciel spécifiquement associé à l'appareil.

Une décomposition en série de Fourier (par exemple FFT) de chaque {x(t)} est effectuée sur q blocs de données échantillonnées et accumulés (taille totale du bloc = Te). On obtient ainsi l'estimée d'un spectrogramme selon la figure 7, d'apparence grossièrement gaussienne en fréquence pour chaque tranche K1 à K10 (figure 4). Cette forme caractéristique ou "courbe gaussienne fréquentielle" est due, pour les fréquences basses, aux échos des particules sortant du volume d'analyse et, pour les fréquences hautes, à celles y pénétrant. Les raies du "centre" de la "courbe gaussienne fréquentielle" donnent l'idée de la fréquence Doppler moyenne et, ainsi, de la vitesse moyenne de la tranche analysée.

On en tire alors la densité spectrale de puissance estimée $\tilde{G}xx(f)$ ou spectre d'énergie (figure 7), avec Be = 1/Te, sa bande fréquentielle, et T la taille totale de l'enregistrement. Il vient alors T = q * Te.

La forme du spectrogramme peut être interprétée par un certain nombre d'indices obtenus par calcul des moments statistiques liés aux phénomènes physiques étudiés, sur la "courbe gaussienne fréquentielle" (figure 7). Ainsi :

- le moment d'ordre 1 $E[\tilde{fd}]$ de la Densité Spectrale de Puissance (DSP) correspond à la fréquence moyenne Doppler, qui varie lin $\sigma[\tilde{fd}]$ nt avec la vitesse moyenne d'écoulement de la tranche d'écoulement étudiée ;
- le moment d'ordre 2 $\sigma[\tilde{fd}]$ de la Densité Spectrale de Puissance (DSP) donne une indication sur l'état laminaire ou turbulent de la tranche ;
- le moment d'ordre 3 de la Densité Spectrale de Puissance (DSP) donne une idée du biais de mesure aux abords des parois de l'écoulement, dû en partie à la géométrie du faisceau $\tilde{G}xx(f)$ nclinaison par rapport à la verticale ;
- l'amplitude maximale de la Densité Spectrale de Puissance (DSP) $\tilde{G}xx(f)$ et sa forme sont une fonction multiparamétrique du nombre et de la taille des particules du volume d'analyse de la tranche d'écoulement.

A ce stade, pour l'analyse de la vitesse Doppler moyenne dans une tranche, le spectrogramme fournit une information dont on ne connaît pas la précision. A cet effet, il est nécessaire de lui appliquer un calcul d'erreur permettant d'obtenir un intervalle de confiance associé à chaque raie spectrale. Du point de vue statistique, pour chaque raie spectrale, le nombre de degrés de liberté est donné par n = 2 * (T/Te) = 2 * q.

Le travail étant effectué avec 50 blocs de données, n = 100. Ce nombre peut être considéré comme suffisant pour satisfaire au théorème central limite et pour travailler sur des échantillons dont les erreurs statistiques peuvent être considérées comme gaussiennes.

Le programme de traitement des données permet de calculer ces erreurs et donc celle sur la vitesse mesurée. Ces dernières sont données par l'équation suivante :

$$\text{erreur aléatoire standard} = \frac{1}{\sqrt{B_e T}} = \frac{1}{\sqrt{q}}$$

et les incertitudes :

$$\frac{n\widehat{Gxx}}{\chi_n^2, \alpha/2} \leq Gxx < \frac{n\widehat{Gxx}}{\chi_n^2, (1-\alpha/2)}$$

Ceci associe une "enveloppe spectrale" (en pointillés sur la figure 7) à un degré de certitude. Ensuite, on recalcule les incertitudes $E\left[\widehat{f\!d}\right]$ à partir de l'interprétation du cas le plus défavorable des marges d'erreur (figure 8), et ceci pour les marges inférieures et supérieures de $\widehat{f}_d$ ($\widehat{f}_{ds}$ et $\widehat{f}_{di}$). $\widehat{f}_{di}$ est le "symétrique" de $\widehat{f}_{ds}$ par rapport à $E\left[\widehat{f\!d}\right]$ et n'est pas représenté aux dessins annexés pour des raisons de surcharge de la figure 8.

Le principe de la mesure de vitesse par ultrasons pulsés, tel qu'il a été décrit ci-dessus comporte, cependant, une limite physique intrinsèque. En effet, il existe une relation inverse entre la vitesse maximale mesurable dans un volume de mesure, et la profondeur de mesure explorée. Ces limites sont toutes deux liées à la fréquence de répétition du train d'onde émis qui constitue la fréquence d'échantillonnage par la relation suivante :

$$\frac{f_e}{2 \cdot k_s} = \frac{2 \cdot f_0 \cdot V_{Max} \cdot \cos \beta}{c} = \frac{c}{4 \cdot P \cdot k_s} \qquad (1)$$

dans laquelle :

$f_e$ : fréquence d'échantillonnage
$k_s$ : coefficient de sur-échantillonnage
$f_0$ : fréquence d'émission
$V_{Max}$ : vitesse maximale mesurable dans un écoulement
$\beta$ : l'angle de tir par rapport à l'horizontale
$c$ : célérité du son dans l'eau
$P$ : profondeur de mesure maximum que l'on peut explorer.

Le théorème de Shannon impose $k_s \geq 1$. Le choix de $f_0$ est imposé par deux contraintes physiques, à savoir le taux d'atténuation du milieu et la taille des particules diffusantes. L'angle de tir $\beta$ est choisi en tenant compte de l'erreur de mesure qu'il occasionne sur la vitesse :

$$\frac{\Delta V_{Max}}{V_{Max}} = \left|\tan \beta\right| \cdot \Delta \beta \qquad (2)$$

où :

$\Delta V_{Max}$ :  erreur sur la vitesse

$\Delta\beta$ :  erreur sur l'angle

Dans le cas d'un écoulement standard utilisé dans les réseaux d'assainissement (DN1000, $V_{Max}$ = 3 m/s), par exemple pour une fréquence d'émission $f_0$ fixée à 1 Mhz, un angle de tir fixé à 80˚ maximum et un $\Delta\beta$ de 1˚, la fréquence d'échantillonnage ne pourra pas être fixée en dessous de 1390 Hz pour respecter le théorème de Shannon. Il en résulte une profondeur de mesure maximale explorable de 54 cm, et une erreur sur la vitesse $\Delta V$ de 10%.

L'échantillonnage d'un signal continu est réalisé par une suite d'impulsions infiniment brèves, appelé $P_{gn}(t)$ ou peigne temporel. Echantillonner un signal continu x(t) à la fréquence $f_e$ revient à multiplier x(t) par une suite d'impulsions de Dirac séparées de Te=1/$f_e$

Cette suite d'impulsions s'écrit :

$$P_{gn}(t) = \sum_{k=-\infty}^{+\infty} \delta(t - kT_e) \tag{3}$$

On sait que :

$$TF\left\{ \sum_{k=-\infty}^{+\infty} \delta(t - kT_e) \right\} = f_e \sum_{n=-\infty}^{+\infty} \delta(f - nf_e) \tag{4}$$

donc :

$$TF\{P_{gn}(t)\} = f_e \cdot P_{gn}(f) \tag{5}$$

Le membre de droite de l'équation (5) est un peigne fréquentiel. Si nous désignons par $\hat{x}(t)$ la fonction x(t) échantillonnée par un peigne temporel, on a :

$$\hat{x}(t) = \sum_{k=-\infty}^{+\infty} x(kT_e) \cdot \delta(t - kT_e) \tag{6}$$

qui est le produit de la fonction x(t) et d'un peigne temporel. L'expression (6) peut aussi s'écrire :

$$\hat{x}(t) = x(t) \cdot \sum_{k=-\infty}^{+\infty} \delta(t - kT_e) \tag{7}$$

De là on tire :

$$TF\{\hat{x}(t)\} = X(f) * f_e \sum_{n=-\infty}^{+\infty} \delta(f - nf_e) \tag{8}$$

qui est une convolution dans l'espace des fréquences (théorème de Plancherel). Ceci signifie que le spectre de $\hat{x}(t)$ est celui de x(t) "périodisé", c'est-à-dire répété sur l'axe des fréquences avec une "période" $f_e$ = 1/$T_e$.

Le théorème de Shannon est illustré par les deux exemples de spectres ci-dessous :

Spectre dans le cas de l'échantillonnage à fe > 2 fmax

Spectre dans le cas de l'échantillonnage fe < 2 fmax

Si x(t) a une TF X(f) telle que X(f) soit nulle pour $|f| \geq f_{max}$, le spectre de x(t) va donc s'étendre sur une largeur $2f_{max}$, de $-f_{max}$ à $+f_{max}$.

Pour que la répétition périodique de ce spectre ne déforme pas le motif répété, il faut et il suffit, conformément au théorème d'échantillonnage de Shannon que $f_e > 2f_{max}$.

Si on multiplie cette expression par une fonction porte de largeur $f_e$, soit $\Pi_{fe/2}(f)$, cette fonction étant nulle à l'extérieur de l'intervalle $-f_e/2$, $+f_e/2$, on va retrouver le spectre initial. On aura donc :

$$\left[ X(f) * f_e \sum_{n=-\infty}^{+\infty} \delta(f - nf_e) \right] \cdot \Pi_{f_e/2}(f) = X(f) \cdot f_e \qquad (9)$$

En reprenant la relation (1), on s'aperçoit que la seule solution pour augmenter sensiblement la profondeur d'analyse pour une vitesse maximale donnée consiste, soit à diminuer la fréquence d'émission $f_0$ (au détriment du nombre de particules détectables), soit à augmenter l'angle $\beta$ (au détriment de la précision), soit de diminuer le facteur $k_s$.

Selon une autre caractéristique de l'invention, afin d'augmenter sensiblement la profondeur d'analyse pour une vitesse maximale donnée, l'analyse est effectuée en travaillant avec une fréquence d'échantillonnage selon l'équation suivante :

$$f_e = 2k_s \cdot f_{max} \text{ avec } k_s < 1 \qquad (10)$$

dans laquelle :

$$k_s = \frac{1}{k} \text{ avec } k > 1$$

$f_e$:    fréquence d'échantillonnage
$f_{max}$ :    fréquence maximale

Ainsi, on utilise des propriétés habituellement inexploitées de la théorie de Shannon que sont la périodisation des spectres.

Une telle analyse peut être envisagée, conformément à l'invention, dans la mesure où elle se situe dans le cadre des spectres à bandes réduites. En effet, le spectre en fréquence d'un volume d'écoulement couvre, dans le cas de figure habituel de la présente invention, environ 1/4 au plus de la bande de fréquence totale de l'analyse de Fourier. Les variations de fréquences Doppler obtenues dans les volumes de mesures se traduisent par un glissement du spectre le long de l'échelle des fréquences. Ceci écarte la possibilité de faire une hypothèse quant à la situation a priori de ce spectre.

Le schéma de recouvrement spectral a) ci-après illustre un écoulement où les variations de vitesses auraient des fréquences Doppler allant de 0 à $v_{max}$, et dans lequel on considère que $k_s = k = 1$. Ce schéma représente le cas limite de la fréquence Doppler $v = v_{max}$ correspondant à $V_{Max}$. La bande spectrale s'étend de façon symétrique de $v$ -B à $v$ +B. $S^+(v)$ et $S^-(v)$ correspondent aux fréquences positives et négatives du spectre de puissance original. Dans ce cas de figure limite, $v$ +B=$f_{max}$ et 2 ($v$ +B)=$f_e$, et la fréquence de récurrence des spectres $f_p$=2 ($v$ +B). Le théorème de Shannon est respecté dans cette situation, qui n'est pas celle selon la présente invention.

Le schéma de recouvrement spectral b) ci-dessus représente le cas où $k_s$ = ½, $k$ = 2. Dans ce cas, la fréquence de répétition des spectres est modifiée par le facteur k :

$$f_p = \frac{2}{k}(v + B) \qquad (11)$$

Il apparaît que le nombre de spectres périodisés a été multiplié par le facteur k. Pour reconstruire le spectre original, il est nécessaire d'effectuer au moins un deuxième test en état de sous échantillonnage. Le facteur k de sous échantillonnage doit être un nombre non multiple de celui du premier test.

Le schéma de recouvrement spectral c) représente le cas où $k_s$ = 1/3, $k$ = 3. Dans ce cas, la fréquence de répétition des spectres est modifiée par le facteur k comme indiqué par l'équation (11). Il se trouve que le caractère non multiple de ce test et du précédent fait que seuls les spectres originaux périodiques en $f_e$ sont parfaitement alignés. Dans les autres cas, les spectres se recouvrent soit partiellement, ou pas du tout. On multiplie ensuite les spectres par une porte de largeur $f_e$, selon l'équation :

$$S_{k_x p} = S_{k_x}(f) \cdot \Pi_{f_e/2}(f)$$

$$k_x > 1 \tag{12}$$

$$k_x \quad au \quad nombre \quad de \quad 2, \quad non \quad multiples$$

En ne gardant dans les résultats de tests obtenus que les fréquences allant de (- $v$ -B) à (+ $v$ +B), on aboutit à une isolation du spectre en effectuant le produit :

$$S_p(f) = \prod_{x=1}^{n} S_{k_x p}(f) \tag{13}$$

Dans le spectrogramme $S_p(f)$, deux pics vont émerger, correspondant à l'emplacement des spectres originaux $S^+(v)$ et $S^-(v)$. Dans la présente invention, une simple détection du maximum du pic correspondant aux fréquences positives $S^+(v)$ va permettre de centrer une porte de largeur 2B autour de la fréquence Doppler $v$. En multipliant cette porte par $S_p(f)$, on va extraire $S^+(v)$, selon l'équation ci-après. Ceci peut s'écrire :

$$S^+(v) = \left[ S_p(f) \cdot \Pi_B(v) \right]^{1/x} \tag{14}$$

Le spectre $S^-(v)$ est obtenu par simple duplication de $S^+(v)$ par symétrie paire. On a ainsi reconstruit le spectre original continu. Il est important de préciser que le raisonnement ci-dessus sera valable quelle que soit la position de la fréquence Doppler $v$ entre 0 et $v_{max}$. En effet, la périodisation $f_p$ des spectres $S^+(v)$ et $S^-(v)$ est toujours conservée, et c'est elle qui est l'élément déterminant permettant de toujours pouvoir appliquer l'équation (14) quelle que soit la valeur de $v$.

Conformément à une autre caractéristique de l'invention, la caractérisation de la largeur de bande B maximum autorisée pour un spectre $S^+(v)$ ou $S^-(v)$ en fonction du facteur de sous échantillonnage k est effectuée en posant l'inéquation suivante :

$$\frac{f_{max}}{k} \geq 2B \Rightarrow \frac{(v + B)}{k} \geq 2B \tag{15}$$

qui peut également s'écrire :

$$B \leq \frac{v}{2k - 1} \tag{16}$$

Ces inéquations permettent de fixer les limites de fonctionnement dans lesquelles les informations relevées sont intégralement exploitable.

Ainsi, en mettant en oeuvre l'inéquation (16) ci-dessus et en choisissant deux facteurs k de sous échantillonnage 2 et 3, la relation (1) permettra d'obtenir une profondeur d'exploration théorique respectivement de 108 cm et de 162 cm. Comme l'association des deux est nécessaire pour la reconstruction du spectre continu original, l'appareil sera limité à une profondeur maximale de 108 cm.

La fréquence Doppler maximum est donnée par la relation :

$$v_{max} = \frac{2 \cdot f_0 \cdot V_{Max} \cdot \cos \beta}{c} \tag{17}$$

Dans cet exemple, $v_{max}$ = 695 Hz. Pour les facteurs k de 2 et 3, l'inéquation (16) aboutit respectivement à un $B_{max}$ de 232 Hz et 139 Hz. Dans ce cas, c'est $B_{max}$ = 139 Hz qui est retenu.

Le procédé selon l'invention aboutit à trois conséquences importantes, à savoir :

* le sous échantillonnage permet d'augmenter la profondeur d'un facteur égal au plus petit des facteurs de sous échantillonnage utilisés ;
* le gain en profondeur se fait au détriment du temps nécessaire pour effectuer la mesure. Dans l'exemple étudié plus haut, avec des k de 2 et 3, le temps nécessaire pour remplir un bloc échantillon temporel sur lequel on pourra porter une analyse spectrale sera 5 fois plus long ;
* enfin, du point de vue de l'électronique à mettre en oeuvre, il sera nécessaire de prévoir deux séquencements distincts, correspondant à un sous échantillonnage d'un facteur 2 et 3 (toujours dans le cadre de l'exemple étudié).

Grâce à l'invention, il est possible de réaliser un dispositif de mesure des vitesses de liquides dans des conduites et des canaux, notamment des réseaux d'assainissement transportant les rejets d'eaux, naturelles, pluviales ou industrielles, permettant de mesurer des profils de vitesses et de turbulence dans des sections d'écoulements en charge ou à surface libre de fluide. Ce dispositif peut être utilisé comme instrument de laboratoire ou in-situ pour la mesure en continu de vitesses stables ou fluctuantes de fluides transparents ou non.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1.  Procédé de mesure des vitesses de liquides dans des conduites et des canaux, permettant d'obtenir des profils de vitesses et de turbulence dans des sections d'écoulements en charge ou à surface libre de fluide, **caractérisé en ce qu'**il consiste essentiellement à réaliser, transversalement à un écoulement et suivant un angle incliné par rapport à la verticale de l'écoulement dans une conduite ou un canal (1), à une fréquence variable mais prédéterminée, des suites d'émissions et de réceptions d'ultrasons, au moyen d'un émetteur-récepteur d'ultrasons (2), à une fréquence $f_0$ pendant un temps $t_1$, à enregistrer successivement un signal de fréquence rétro diffusé par les parois de la conduite ou du canal (1), pendant une période $t_2$, et le signal de fréquence $f_0 \pm f_d$ rétro diffusé par les traceurs et/ou les particules en suspension dans l'écoulement pendant une période $t_3$, puis à analyser les modulations en fréquence et en amplitude de ce signal, afin d'en extraire une ou des valeurs durant un ou des intervalles de temps d'écho alloués à une ou à des segments ou tronçons de mesure considérés, cette analyse du signal rétro diffusé pendant la période $t_3$ consistant à le diviser en un nombre prédéterminé de segments ou tronçons de mesure, chaque segment ou tronçon de mesure correspondant à un volume de mesure dans l'écoulement, en première approximation cylindrique, dont la localisation est calculée en tenant compte de la vitesse du son dans le liquide et du temps écoulé entre l'émission et la réception du segment de signal, le signal rétro diffusé étant échantillonné au moyen d'un échantillonneur-bloqueur, après multiplication analogique avec une fréquence porteuse et filtrage, en des impulsions d'écho $E_1$ à $E_N$, en vue de l'obtention d'une valeur moyenne du signal durant un intervalle de temps d'écho alloué à un segment ou tronçon considéré et à reconstituer un profil de l'écoulement par prise en compte des signaux correspondants aux segments ou tronçons considérés

2.  Procédé, suivant la revendication 1, **caractérisé en ce que** le signal rétro diffusé est divisé en un nombre de segments ou tronçons de mesure compris entre 8 et 128.

3.  Procédé, suivant la revendication 1, **caractérisé en ce que**, lors d'un traitement en mode multicanaux, le signal Doppler $f_0 + f_d$ est rétro diffusé en continu par le milieu en écoulement tout au long de la corde analysée, qui correspond à l'axe d'émission de l'émetteur (2) dans la conduite ou le canal concerné et un échantillonneur-bloqueur isole un signal Doppler pour chaque segment ou tronçon d'écoulement (K1 à Kn) localisée dans chacune des fenêtres temporelles isolées pendant la période $t_3$.

4.  Procédé, suivant la revendication 3, **caractérisé en ce qu'**à chaque segment ou tronçon d'écoulement (K1 à Kn) est associé un signal Doppler {x(t)}, considérée comme une variable aléatoire, l'information de vitesse d'écoulement étant obtenue par le traitement, segment ou tronçon par segment ou tronçon, du signal numérique délivré par la carte de conversion analogique/digitale, à l'aide d'un logiciel spécifiquement associé à l'appareil.

5.  Procédé, suivant la revendication 4, **caractérisé en ce qu'**une décomposition en série de Fourier de chaque {x(t)} est effectuée sur q blocs de données échantillonnées et accumulés, en vue de l'obtention de l'estimée d'un spectrogramme d'apparence grossièrement gaussienne en fréquence pour chaque segment ou tronçon (K1 à Kn).

**6.** Procédé, suivant la revendication 5, **caractérisé en ce qu'**on tire de l'estimée du spectrogramme d'apparence grossièrement gaussienne en fréquence la densité spectrale de puissance estimée $\widehat{Gxx}(f)$ ou spectre d'énergie, avec Be = 1/Te, sa bande fréquentielle, et T la taille totale de l'enregistrement, d'où il vient alors T = q * Te.

**7.** Procédé, suivant la revendication 5, **caractérisé en ce que** la forme du spectrogramme est interprétée par un certain nombre d'indices obtenus par calcul des moments statistiques liés aux phénomènes physiques étudiés, à savoir:

le moment d'ordre 1 $E\left[\hat{f}\hat{d}\right]$ de la Densité Spectrale de Puissance (DSP) correspond à la fréquence moyenne Doppler, qui varie linéairement avec la vitesse moyenne d'écoulement du segment ou tronçon d'écoulement étudié ;

le moment d'ordre 2 $\sigma\left[\hat{f}\hat{d}\right]$ de la Densité Spectrale de Puissance (DSP) donne une indication sur l'état laminaire ou turbulent du segment ou tronçon;
- le moment d'ordre 3 de la Densité Spectrale de Puissance (DSP) donne une idée du biais de mesure aux abords des parois de l'écoulement, dû en partie à la géométrie du faisceau et à son inclinaison par rapport à la verticale;

- l'amplitude maximale de la Densité Spectrale de Puissance (DSP) $\widehat{Gxx}(f)$ et sa forme sont une fonction multiparamétrique du nombre et de la taille des particules du volume d'analyse du segment ou tronçon d'écoulement.

**8.** Procédé, suivant la revendication 7, **caractérisé en ce qu'**à à chaque raie spectrale est associé un nombre de degrés de liberté suivant la relation : n = 2 * (T/Te) = 2 * q.

**9.** Procédé, suivant l'une quelconque des revendications 4 à 8, **caractérisé en ce qu'**il consiste à calculer des erreurs et en particulier celle sur la vitesse mesurée par l'équation suivante :

$$\text{erreur aléatoire standard} = \frac{1}{\sqrt{B_e T}} = \frac{1}{\sqrt{q}}$$

et les incertitudes par l'équation :

$$\frac{n\widehat{Gxx}}{\chi_n^2, \alpha/2} \leq Gxx < \frac{n\widehat{Gxx}}{\chi_n^2, (1-\alpha/2)}$$

**10.** Procédé, suivant la revendication 1, **caractérisé en ce que** l'analyse est effectuée en travaillant avec une fréquence d'échantillonnage selon l'équation suivante :

$$f_e = 2k_s \cdot f_{max} \text{ avec } k_s < 1$$

dans laquelle :

$$k_s = \frac{1}{k} \text{ avec } k > 1$$

$f_e$ : fréquence d'échantillonnage
$f_{max}$ : fréquence maximale

**11.** Procédé, suivant la revendication 10, **caractérisé en ce qu'**une reconstruction du spectre original est effectuée par réalisation d'au moins deux tests en état de sous échantillonnage, le facteur k de sous échantillonnage du deuxième test étant un nombre non multiple de celui du premier test, ces tests étant réalisés selon l'équation :

$$S_{k_x P} = S_{k_x}(f) \cdot \Pi_{f_e/2}(\dot{f})$$

$$k_x > 1$$

$k_x$ au nombre de 2, non multiples

**12.** Procédé, suivant la revendication 11, **caractérisé en ce qu'**il consiste à ressortir le spectre en effectuant le produit :

$$S_p(f) = \prod_{x=1}^{n} S_{k_x P}(f)$$

**13.** Procédé, suivant la revendication 12, **caractérisé en ce qu'**on isole le spectre en effectuant le produit :

$$S^+(v) = \left[ S_p(f) \cdot \Pi_B(v) \right]^{1/x}$$

**14.** Procédé, suivant la revendication 12, **caractérisé en ce qu'**il consiste à caractériser la largeur de bande B maximum autorisée pour un spectre $S^+(v)$ ou $S^-(v)$ en fonction du facteur de sous échantillonnage k, en posant l'inéquation suivante :

$$\frac{f_{\max}}{k} \geq 2B \Rightarrow \frac{(v+B)}{k} \geq 2B$$

qui peut également s'écrire :

$$B \leq \frac{v}{2k-1}$$

**15.** Dispositif pour la mise en oeuvre du procédé suivant l'une quelconque des revendications 1 à 14, **caractérisé en ce qu'**il est essentiellement constitué par au moins un émetteur-récepteur d'ultrasons (2) sous forme d'une sonde piézo-électrique placée transversalement à l'écoulement, inclinée d'un angle (β) par rapport à l'écoulement et fixée sur la paroi de la conduite ou canal (1) avec interposition d'un gel, sur le fond d'un canal ou sur une canne mobile qui peut être plongée dans l'écoulement, par un dispositif électronique (3), d'ultrasons alimentant et commandant ledit émetteur-récepteur d'ultrasons (2), dispositif électronique (3), ledit dispositif électronique (3) étant constitué par un tableau de commande (5), par un module d'alimentation (6), par un oscillateur (7), par un séquenceur (8), par un dispositif de pilotage de sonde (9) et par une carte de démodulation (10) de l'écho Doppler comportant, d'une part, un ensemble démodulateur (11), formé par un module multiplieur (12) piloté par l'oscillateur (7), par un filtre passe-bas (13) et par un circuit échantillonneur-bloqueur (14) piloté par le séquenceur de trame (8) et, d'autre part, une interface de ligne (15) pour le signal analogique multiplexé et une interface de lignes (16) pour les signaux de commandes, l'ensemble de ces éléments étant monté dans un coffret, et par un dispositif électronique (4) de traitement des signaux et d'extraction de l'information recherchée.

**16.** Dispositif, suivant la revendication 15, **caractérisé en ce que** le dispositif de pilotage (9) de la sonde piézo-électrique formant l'émetteur-récepteur d'ultrasons (2) comporte un module d'émission HF, un module de réception HF et un module de compensation permettant le basculement entre le mode émission et le mode réception, avec désactivation mutuelle des circuits émission et réception.

**17.** Dispositif, suivant la revendication 16, **caractérisé en ce que** la carte de démodulation (10) est complétée par un module de déphasage permettant de disposer du signal et du signal déphasé de π/2.

**Claims**

**1.** Method for measuring the speed of liquids in conduits and channels, making it possible to obtain profiles for velocity and turbulence in flow sections that are under pressure or on the free surface of the fluid, **characterised in that** it consists essentially of providing, transversely to the flow and inclined at an angle to the vertical direction of flow in a conduit or channel (1), at a variable but predeterminable frequency, streams of ultrasound emissions and receptions, by means of an ultrasound emitter-receiver (2), at a frequency $f_0$ during a period $t_1$, successively recording a frequency signal backscattered by the walls of the conduit or channel (1), during a period $t_2$, and the frequency signal $f_0 \pm f_d$ backscattered by the tracers and/or the suspension particles in the flow for a period $t_3$, and subsequently analysing the frequency and amplitude modulations of said signal in order to extract one or more values during one or more echo time intervals allocated to one or more segments or sections, said analysis of the backscattered signal during period $t_3$ consisting of dividing it into a predetermined number of measurement segments or sections, each measurement segment or section corresponding to a measurement volume in the flow, in the first cylindrical approximation, the location of which is calculated taking into account the speed of sound in the liquid and the time between the emission and the reception of the segment of signal, the backscattered signal being sampled by means of a sampler-blocker, after analogue multiplication with a carrier and filtering frequency, in echo pulses $E_1$ to $E_N$, with the purpose of obtaining an average value of the signal during an interval of time of the echo assigned to a segment or section and reforming a flow profile by taking into account signals corresponding to the segments or sections considered.

**2.** Method according to claim 1, **characterised in that** the backscattered signal is divided into a number of measurement segments or sections of between 8 and 128.

**3.** Method according to claim 1, **characterised in that** when processing in multi-channel mode, the Doppler signal $f_0$ + $f_d$ is backscattered continuously by the medium flowing all along the line to be analysed, which corresponds to the axis of emission of the emitter (2) in the conduit or channel concerned, and a sampler blocker isolates a Doppler signal for each flow segment or section (K1 to Kn) located in each of the time windows isolated during period $t_3$.

**4.** Method according to claim 3, **characterised in that** to each flow segment or section (K1 to Kn) a Doppler signal {x(t)} is assigned, considered to be a random variable, the information about flow velocity being obtained by processing, segment or section by segment or section, the numerical signal supplied by the analogue/digital conversion board by means of software assigned specifically to the device.

**5.** Method according to claim 4, **characterised in that** a Fourier transform of each {x(t)} is performed on q blocks of sampled and accumulated data, with the aim of obtaining from the evaluation a spectrogram with a roughly Gaussian appearance in frequency for each segment or section (K1 to Kn).

**6.** Method according to claim 5, **characterised in that** from an evaluation of the spectrogram with a roughly Gaussian appearance in frequency the spectral density of estimated power $\widehat{Gxx(f)}$ or energy spectrum is taken, with Be = 1/Te, its frequency band, and T the total size of the recording from where it comes when T=q*Te.

**7.** Method according to claim 5, **characterised in that** the shape of the spectrogram is interpreted by a specific number of indices obtained by calculating the statistical moments connected with the physical phenomena studied, namely:

- the moment of order 1 $E[\widehat{fd}]$ of the power spectral density (PSD) corresponds to the average Doppler frequency, which varies linearly with the average flow velocity of the flow segment or section studied;

- the moment of order 2 $\sigma[\widehat{fd}]$ of the power spectral density (PSD) gives an indication of the laminar or turbulent state of the segment or section;

- the moment of order 3 of the power spectral density (PSD) gives an idea of the measurement bias at the approaches of the flow walls, due in part to the geometry of the group and its inclination relative to the vertical;

- the maximum amplitude of the power spectral density (PSD) $\widehat{Gxx(f)}$ and its shape are a multi-parametric function of the number and size of the particles of the analysed volume of the flow segment or section.

**8.** Method according to claim 7, **characterised in that** to each spectral line several degrees of freedom are assigned in the relationship: n=2*(T/Te)=2*q.

**9.** Method according to any one of claims 4 to 8, **characterised in that** it consists of calculating errors and in particular that of the velocity measured by the following equation:

$$\text{standard random error} = \frac{1}{\sqrt{B_e T}} = \frac{1}{\sqrt{q}}$$

and uncertainties by the equation:

$$\frac{n\widehat{Gxx}}{\chi^2_n, \alpha/2} \leq Gxx < \frac{n\widehat{Gxx}}{\chi^2_n, (1-\alpha/2)}$$

**10.** Method according to claim 1, **characterised in that** the analysis is carried out by working with a sample frequency according to the following equation:

$$f_e = 2k_s \cdot f_{max} \text{ avec } k_s < 1$$

in which:

$$k_s = \frac{1}{k} \text{ avec } k > 1$$

$f_e$: frequency of sampling
$f_{max}$: maximum frequency.

**11.** Method according to claim 10, **characterised in that** a reconstruction of the original spectrum is obtained by producing at least two tests in a state of bottom sampling, factor k of bottom sampling of the second test being a number that is not a multiple of that of the first test, said tests being performed according to the equation:

$$S_{k_x P} = S_{k_x}(f) \cdot \Pi_{f_e/2}(f)$$

$$k_x > 1$$

$k_x$ to the number 2, non multiples.

**12.** Method according to claim 11, **characterised in that** it consists of reissuing the spectrum by obtaining the product:

$$S_P(f) = \prod_{x=1}^{n} S_{k_x P}(f)$$

**13.** Method according to claim 12, **characterised in that** the spectrum is isolated by obtaining the product:

$$S^+(\nu) = \left[ S_p(f) \cdot \Pi_B(\nu) \right]^{1/x}$$

**14.** Method according to claim 12, **characterised in that** it consists of characterising the maximum width of band B permitted for a spectrum $S^+(\nu)$ or $S^*(\nu)$ as a function of the factor of bottom sampling k, by setting the following inequation:

$$\frac{f_{\max}}{k} \geq 2B \Rightarrow \frac{(\nu + B)}{k} \geq 2B$$

which can also be written as:

$$B \leq \frac{\nu}{2k - 1}$$

**15.** Device for implementing the method according to any one of claims 1 to 14, **characterised in that** it essentially consists of at least one ultrasound emitter-receiver (2) in the form of a piezoelectric sensor arranged transversally to the flow and inclined at an angle (β) in relation to the flow and fixed onto the wall of the conduit or channel (1) by means of a gel, on the base of a channel or on a mobile cane, which can be plunged into the flow by an electronic device (3) supplying and controlling the said ultrasound emitter-receiver (2), the said electronic device (3) consisting of a control panel (5), a feed module (6), an oscillator (7), a sequencer (8), a device for guiding the sensor (9) and by a demodulation board (10) of the Doppler echo, comprising on the one hand a demodulator assembly (11) formed by a multiplier module (12) guided by the oscillator (7), a low-pass filter (13) and a sampler blocker circuit (14) guided by the screen sequencer (8) and on the other hand a line interface (15) for the multiplexed analogue signal and a line interface (16) for the control signals, the assembly of these elements being mounted in a casing, and by an electronic device (4) for processing signals and the extraction of retrieved information

**16.** Device according to claim 15, **characterised in that** the guiding device (9) of the piezoelectric sensor forming the ultrasound emitter-receiver (2) comprises an emission module HF, a reception module HF and a compensation module which permits rocking between the emission mode and the reception mode, with mutual deactivation of the emission and reception circuits.

**17.** Device according to claim 16, **characterised in that** the demodulation board (10) is completed by a phase displacement module making it possible to have the signal and out-of-phase signal of π/2.

**Patentansprüche**

**1.** Verfahren zum Messen von Geschwindigkeiten von Flüssigkeiten in Rohren und Kanälen, mit dem Geschwindigkeits- und Turbulenzprofile in Querschnitten von Strömungen unter Druck oder mit freier Fluidoberfläche erhalten werden können, **dadurch gekennzeichnet, dass** es im Wesentlichen darin besteht, quer zu einer Strömung und einem bezüglich der Vertikalen der Strömung in einem Rohr oder einem Kanal (1) geneigten Winkel folgend bei einer variablen, jedoch vorbestimmten Frequenz Folgen von Ultraschallaussendungen und -empfängen mittels eines Ultraschallsenders/-Empfängers (2) während einer Zeit $t_1$ mit einer Frequenz $f_0$ durchzuführen, sukzessive ein von den Wänden des Rohrs oder des Kanals (1) rückgestreutes Frequenzsignal während einer Zeitdauer $t_2$ und das von in der Strömung in Suspension befindlichen Spurenteilchen und/oder Partikeln rückgestreute Frequenzsignal $f_0 \pm f_d$ während einer Zeitdauer $t_3$ zu registrieren, dann die Modulationen in Frequenz und Amplitude dieses Signals zu analysieren, um einen Wert oder Werte während eines Echozeitintervalls oder während Echozeitintervallen zu extrahieren, die für ein oder mehrere betrachtete Messsegmente oder -abschnitte vorgegeben sind, wobei diese Analyse des rückgestreuten Signals während der Zeitdauer $t_3$ darin besteht, es in eine vorbestimmte Anzahl von Messsegmenten oder -abschnitten zu unterteilen, wobei jedes Messsegment oder jeder Messabschnitt einem Messvolumen in der Strömung entspricht, das in erster Näherung zylindrisch ist, dessen Lokalisierung unter Berücksichtigung der Schallgeschwindigkeit in der Flüssigkeit und der zwischen der Aussendung und dem Empfang des Signalsegments vergangenen Zeit berechnet wird, wobei das rückgestreute Signal mittels eines Abtast-Haltegliedes nach analoger Multiplikation mit einer Trägerfrequenz und Filterung in Echoimpulsen $E_1$ bis $E_N$ hinsichtlich der Gewinnung eines Mittelwertes des Signals während eines Echozeitintervalls abgetastet wird, das für ein betrachtetes Segment oder einen betrachteten Abschnitt vorgegeben ist, und ein Strömungsprofil durch Berücksichtigung der den betrachteten Segmenten oder Abschnitten entsprechenden Signalen zu rekonstruieren.

2. Verfahren nach Anspruch 1, **dadurch gekennzeichnet, dass** das rückgestreute Signal in eine Anzahl im Bereich von 8 bis 128 Messsegmenten oder abschnitten unterteilt wird.

3. Verfahren nach Anspruch 1, **dadurch gekennzeichnet, dass** das Dopplersignal $f_0 + f_d$ während einer Behandlung im Vielkanalmodus kontinuierlich von dem in Strömung befindlichen Medium über die gesamte Länge des analysierten Strangs rückgestreut wird, der der Aussendeachse des Senders (2) in dem betroffenen Rohr oder dem betroffenen Kanal entspricht, und ein Abtast-Halteglied isoliert ein Dopplersignal für jedes Strömungssegment oder jeden Strömungsabschnitt (K1 bis Kn), das in jedem der während der Zeitdauer $t_3$ isolierten Zeitfenster lokalisiert ist.

4. Verfahren nach Anspruch 3, **dadurch gekennzeichnet, dass** jedes Strömungssegment oder jeder Strömungsabschnitt (K1 bis Kn) einem Dopplersignal {x(t)} zugeordnet ist, das als eine Zufallsvariable betrachtet wird, wobei die Strömungsgeschwindigkeitsinformation durch die segment- oder abschnittsweise Behandlung des von der Analog-/Digital-Wandlerkarte gelieferten numerischen Signals mittels eines dem Gerät spezifisch zugeordneten Programms gewonnen wird.

5. Verfahren nach Anspruch 4, **dadurch gekennzeichnet, dass** eine Fourier-Reihenentwicklung jedes {x(t)} auf q abgetasteten und summierten Datenblöcken im Hinblick auf die Gewinnung der Schätzung eines Frequenzspektrogramms von ungefähr Gauß'scher Form für jedes Segment oder jeden Abschnitt (K1 bis Kn) durchgeführt wird.

6. Verfahren nach Anspruch 5, **dadurch gekennzeichnet, dass** aus der Schätzung des Frequenzspektrogramms von ungefähr Gauß'scher Form die geschätzte spektrale Leistungsdichte $\widehat{G}xx$ (*f*) oder das Energiesprektrum hergeleitet wird, wobei Be = 1/Te sein Frequenzband und T die Gesamtgröße der Registrierung ist, woraus sich dann T = q * Te ergibt.

7. Verfahren nach Anspruch 5, **dadurch gekennzeichnet, dass** die Form des Spektogramms durch eine bestimmte Anzahl von Indizien interpretiert wird, die durch Berechnung von statistischen Momenten erhalten werden, die mit untersuchten physikalischen Phänomenen verbunden sind, nämlich:

das Moment 1. Ordnung $\mathrm{E}\big[f\widehat{d}\big]$ der Spektralen Leistungsdichte (DSP) entspricht der mittleren Dopplerfrequenz, die linear mit der mittleren Strömungsgeschwindigkeit des untersuchten Strömungssegments oder -abschnittes variiert;

das Moment 2. Ordnung $\sigma\big[f\widehat{d}\big]$ der Spektralen Leistungsdichte (DSP) ergibt eine Angabe über den laminaren oder turbulenten Zustand des Segments oder Abschnitts;
- das Moment 3. Ordnung der Spektralen Leistungsdichte (DSP) gibt eine Vorstellung von der Messverzerrung in der Umgebung der Strömungswände teilweise aufgrund der Geometrie des Bündels und seiner Neigung bezüglich der Vertikalen;

- die maximale Amplitude der Spektralen Leistungsdichte (DSP) $\widehat{G}xx(f)$ und seine Form sind eine multiparametrische Funktion der Anzahl und der Größe der Partikel des Analysevolumens des Strömungssegments oder -abschnitts.

8. Verfahren nach Anspruch 7, **dadurch gekennzeichnet, dass** jeder Spektrallinie eine Anzahl von Freiheitsgraden gemäß der Relation:
n= 2 * (T/Te) = 2* q zugeordnet ist.

9. Verfahren nach einem der Ansprüche 4 bis 8, **dadurch gekennzeichnet, dass** es darin besteht, Fehler und insbesondere denjenigen der gemessenen Geschwindigkeit durch die folgende Gleichung zu berechnen:

$$\text{Standardzufallsfehler} = \frac{1}{\sqrt{B_e T}} = \frac{1}{\sqrt{q}}$$

und die Unsicherheiten durch die Gleichung:

$$\frac{n\widehat{Gxx}}{\chi^2_{n,\,\alpha/2}} \leq Gxx < \frac{n\widehat{Gxx}}{\chi^2_{n,\,(1-\alpha/2)}}$$

**10.** Verfahren nach Anspruch 1, **dadurch gekennzeichnet, dass** die Analyse durch Arbeiten mit einer Abtastfrequenz gemäß folgender Gleichung durchgeführt wird:

$$f_e = 2k_s \cdot f_{max} \text{ mit } k_s < 1$$

wobei:

$$k_s = \frac{1}{k} \text{ mit } k > 1$$

$f_e$ : Abtastfrequenz
$f_{max}$: Frequenzmaximum

**11.** Verfahren nach Anspruch 10, **dadurch gekennzeichnet, dass** eine Rekonstruktion des Originalspektrums durch Durchführung zumindest zweier Tests im Zustand der Unterabtastung bewirkt wird, wobei der Faktor k der Unterabtastung des zweiten Tests eine Zahl ist, die ein Nichtvielfaches derjenigen des ersten Tests ist, wobei diese Tests gemäß der Gleichung durchgeführt werden:

$$S_{k_x p} = S_{k_s}(f) \cdot \prod_{f_{e^{12}}}(f)$$

$$k_x > 1$$

$k_x$ in einer Anzahl von 2, keine Vielfache voneinander

**12.** Verfahren nach Anspruch 11, **dadurch gekennzeichnet, dass** es darin besteht, das Spektrum wieder zu erhalten, indem das Produkt genommen wird:

$$S_p(f) = \prod_{x=1}^{n} S_{k_x p}(f)$$

**13.** Verfahren nach Anspruch 12, **dadurch gekennzeichnet, dass** das Spektrum isoliert wird, indem das Produkt genommen wird:

$$S^+(v) \;=\; \left[ S_P(f) \;\cdot\; \prod\nolimits_{\bar{B}}(v) \right]^{1/x}$$

**14.** Verfahren nach Anspruch 12, **dadurch gekennzeichnet, dass** es darin besteht, die maximale Bandbreite B zu charakterisieren, die für ein Spektrum $S^+(v)$ oder $S^-(v)$ in Abhängigkeit des Faktors der Unterabtastung k erlaubt ist, indem die folgende Ungleichung aufgestellt wird:

$$\frac{f_{max}}{k} \;\geq\; 2B \;\Rightarrow\; \frac{(v + B)}{k} \;\geq\; 2B$$

die sich auch schreiben lässt als:

$$B \;\leq\; \frac{v}{2k - 1}$$

**15.** Vorrichtung zur Durchführung des Verfahrens nach einem der Ansprüche 1 bis 14, **dadurch gekennzeichnet, dass** sie im Wesentlichen aufweist: zumindest einen Ultraschallsender/-Empfänger (2) in Form einer piezo-elektrischen Sonde, die quer zur Strömung angeordnet, um einen Winkel (β) bezüglich der Strömung geneigt und an der Wand des Rohrs oder Kanals (1) unter Zwischenschaltung eines Gels am Boden eines Kanals oder an einem beweglichen Stab befestigt ist, der in die Strömung eingetaucht werden kann, eine elektronische Vorrichtung (3), die den Ultraschallsender/-Empfänger (2) versorgt und steuert, wobei die elektronische Vorrichtung (3) durch ein Steuertableau (5), durch ein Versorgungsmodul (6), durch einen Oszillator (7), durch einen Sequenzierer (8), durch eine Sondensteuervorrichtung (9) und durch eine Demodulationskarte (10) zur Demodulation des Dopplerechos gebildet ist, die einerseits eine Demodulationsanordnung (11) aufweist, die durch ein von dem Oszillator (9) gesteuertes Multipliziermodul (12), durch einen Tiefpassfilter (13) und durch einen Abtast-Haltekreis (14) gebildet ist, der durch den Rastersequenzierer (8) gesteuert wird, und andererseits eine Leitungsschnittstelle (15) für das gemultiplexte analoge Signal und Leitungsschnittstellen (16) für die Steuersignale aufweist, wobei die Anordnung dieser Elemente in einem Gehäuse angebracht ist, und eine elektronische Vorrichtung (4) zur Signalverarbeitung und zur Extraktion der gesuchten Information.

**16.** Vorrichtung nach Anspruch 15, **dadurch gekennzeichnet, dass** die Steuervorrichtung (9) der piezoelektrischen Sonde, die den Ultraschallsender/-Empfänger (2) bildet, ein HF-Sendemodul, ein HF-Empfangsmodul und ein Kompensationsmodul aufweist, das die Umschaltung zwischen dem Sendemodus und dem Empfangsmodus mit wechselseitiger Deaktivierung der Sende- und Empfangskreise ermöglicht.

**17.** Vorrichtung nach Anspruch 16, **dadurch gekennzeichnet, dass** die Demodulationskarte (10) durch ein Phasenschiebermodul ergänzt ist, das es ermöglicht, das Signal und das phasenverschobene Signal um $\pi/2$ zu verschieben.

Figure 1

Figure 2

Figure 3

Figure 4

Figure 5

Figure 6

Figure 7

Figure 8